# EUROPEAN PATENT APPLICATION

(11) **EP 2 743 641 A1**
(43) Date of publication of application: **18.06.2014**
(21) Application number: 11870978.1
(22) Date of filing: 12.08.2011
(51) Int. Cl.: G01C 21/26

(54) **CHARGING INFORMATION-PROVIDING DEVICE**

(71) Applicant: Toyota Jidosha Kabushiki Kaisha, Toyota-shi, Aichi 471-8571 (JP)
(72) Inventor: KAWAMATA Shinya, Toyota-shi Aichi 471-8571 (JP); ENDO Masato, Toyota-shi Aichi 471-8571 (JP)
(74) Representative: Winter, Brandl, Fürniss, Hübner, Röss, Kaiser, Polte - Partnerschaft
(86) International application number: PCT/JP2011/068468
(87) International publication number: WO 2013/024521

(57) **Abstract**

An information providing apparatus is configured so as to provide, to an occupant of an electric vehicle, information indicating a location of a charging station together with information indicating whether or not the electric vehicle can be charged with a clean electric power at that charging station, through an on-board display 30. Accordingly, the occupant of the electric vehicle V can go to the charging station at which the electric vehicle can be charged with electric power including the clean electric power, based on the provided location information of the charging station and a clean degree, and can charge the electric vehicle C with the electric power including the clean electric power there. In this manner, the electric vehicle V is charged with the electric power including the clean electric power, and thus, the demand for the clean electric power serving as the electric power for charging electric vehicles V can be increased.

## Description

### TECHNICAL FIELD

The present invention relates to a charging information-providing apparatus for providing information relating to charging for an electric vehicle.

### BACKGROUND ART

Activities for reducing CO₂ emission to protect the environment have been globally promoted. For example, in the manufacturing industry, an activity to greatly reduce CO₂ emission by using an electricity in place of fossil fuel as an energy source for manufacturing products has been promoted. Among those activities, in the automobile industry, it is accelerated to spread an electric vehicle driven by an electric power. In addition to the acceleration of spreading the electric vehicle, it is desired to develop a technique for efficiently charging the electricity to the electric vehicle.

A patent literature No. 1 (PLT 1) discloses a charging station search method for searching for a charging station located within an area the electric vehicle can reach. According to the search method, a charging station at which the electric vehicle can be most efficiently charged is found, based on information as to whether or not chargers provided by each charging stations can be used, information regarding an estimated time at which the usage of the charger is finished, and the like.

### [Citation List]

### [Patent Literature]

[PTL 1] Japanese Patent Application Laid-Open (kokai) No. 2010-175492

### SUMMARY OF THE INVENTION

Meanwhile, electric power with which an electric vehicle is charged is generated by a various type of methods. Further, an amount of CO₂ emission differs depending on the type of the electric power generation method. For example, in a case of a thermal power generation, fossil fuel is burnt when generating electrical power, and thus, a large amount of CO₂ is generated during the burning of the fuel. In contrast, in a case of a photovoltaic power generation, little CO₂ is generated in a process in which the light energy is converted into the electric energy. Electric power generated by a power generation method defined as a power generation method which provides a low burden to environment, such as electric power generated by a power generation method discharging a lower amount of CO₂ emission, is referred to as "clean electric power". Charging the electric vehicle with the clean electric power can more greatly contribute to a protection of the global environment.

However, a price of the clean electric power is higher, compared to a price of an electric power (non-clean electric power) generated by an electric power generation method which emits a large amount of CO₂ emission (e.g., the thermal power generation), that is an electric power generation method which provides a high burden to environment. As is understood from the reasons described above, an incentive to positively use the clean electric power for charging has been small. Therefore, a demand for the clean electric power has not been increased. In addition, there is no information which enables the occupant of the electric vehicle to selectively use the clean electric power for charging the electric vehicle. This is also one of the reasons why the demand for the clean electric power has been stagnated.

An object of the present invention is to increase the demand for the clean electric power serving as electric power for charging an electric vehicle.

The present invention provides a charging information-providing apparatus, which provides information relating to charging for an electric vehicle, wherein the apparatus provides, to an occupant of the electric vehicle, charging station information representing a charging station where the electric vehicle can be charged, together with clean electric power information which is information indicating whether or not electric power with which the electric vehicle can be charged at the charging station includes clean electric power generated by a power generation method defined as a power generation method which provides a low burden to environment.

According to the present invention, the charging station information and the clean electric power information are provided to the occupant of the electric vehicle. The clean electric power information indicates whether or not the electric power including the clean electric power can be used to charge the vehicle at the charging station which is represented by the charging station information. Based on the provided information, the occupant of the electric vehicle can go to the charging station at which the electric power including the clean electric power can be used to charge the electric vehicle, and can charge the electric vehicle with the power including the clean electric power. Accordingly, the electric vehicle can be selectively charged with the electric power including the clean electric power, and thus, the demand for the clean electric power serving as the electric power for charging electric vehicles can be increased. As the demand for the clean electric power increases, the price of the clean electric power decreases, and therefore, spreading the clean electric power is accelerated to contribute to the environmental protection.

In the invention described above, the "clean electric power" is electric power which is generated by the power generation method defined as the power generation method which provides a low burden to environment. For example, electric power generated by a power generation method which emits an amount of CO₂ emission smaller than a predetermined reference amount can be defined as the "clean electric power." Examples of the clean electric power may be electric power that is generated by a photovoltaic power generation, a wind force power generation, a geothermal power generation, a fuel cell power generation, or the like, but is not limited thereto.

Further, the "clean electric power information" may be:
information indicating whether or not the electric power with which the electric vehicle can be charged at the charging station includes clean electric power generated by any of the power generation methods, each defined as the power generation method which provides a low burden to environment, or
information indicating whether or not the electric power with which the electric vehicle can be charged at the charging station includes clean electric power generated by a particular (specific) power generation method (e.g., the photovoltaic power generation) among the power generation methods, each defined as the power generation method which provides a low burden to environment.

Further, the "clean electric power information" may be information indicating whether or not the electric power with which the electric vehicle can be charged at the charging station includes clean electric power, using numerical values, symbols, characters, graphical designs, voices, or the like. For example, when the electric power with which the electric vehicle can be charged at the charging station includes the clean electric power, the clean electric power information may be represented by a value of "1", a symbol of "○", letters or a voice of "including the clean electric power", or a specific graphical design. When the electric power with which the electric vehicle can be charged at the charging station does not include the clean electric power, the clean electric power information may be represented by a value of "0", a symbol of "x", letters or a voice of "not including the clean electric power", or a specific graphical design. Note, however, as long as the clean electric power information is represented in such a manner that it allows the occupant of the electric vehicle to notice/understand whether or not the clean electric power is included in the electric power with which the electric vehicle can be charged at the charging station, it is not limited to the above examples.

Further, the "clean electric power information" may be information indicating amount of the clean electric power included in the electric power with which the electric vehicle can be charged at the charging station. Such information can indicate whether or not the electric power with which the electric vehicle can be charged at the charging station includes the clean electric power. Furthermore, the "clean electric power information" may be information indicating a magnitude of a possibility that the electric power with which the electric vehicle can be charged at the charging station includes the clean electric power. For example, when the charging station is equipped with an equipment which generates the clean electric power, a possibility that the clean electric power is used to charge the electric vehicle is high. Accordingly, in this case, the clean electric power information which indicates that the clean electric power is included in the electric power with which the electric vehicle can be charged at the charging station is provided. In contrast, when the charging station is not equipped with the equipment which generates the clean electric power, a possibility that the electric vehicle is charged with a commercial electric power generated by the thermal power generation at the charging station is high. Accordingly, in this case, the clean electric power information which indicates that the clean electric power is not included in the electric power with which the electric vehicle can be charged at the charging station is provided. In addition, the "clean electric power information" may be information which indicates whether or not the electric power with which the electric vehicle can be charged at the charging station includes the clean electric power by a predetermined (constant) amount or more. For example, information indicating whether or not a ratio (clean degree as described later) is equal to or higher than a predetermined ratio (reference clean degree) may be the clean electric power information, the ratio (the clean degree) being a ratio of an amount of the clean electric power to a total amount of the electric power with which the electric vehicle can be charged at the charging station.

The "charging station information" may be any kind of information, as long as it represents the charging station. It is preferable that the charging station information be information which can identify (specify) the charging station, such as a name, an address, and a telephone number, of the charging station.

In this case, it is preferable that the charging station information includes information indicating a location of the charging station. Further, it is preferable that the charging information-providing apparatus provide, to the occupant of the electric vehicle, the charging station information together with the clean electric power information, by displaying, at a position corresponding to the location of the charging station in a map displayed on a display device capable of displaying the map, a charge enablement sign (mark) indicating that a place corresponding to the sign is a place where the electric vehicle can be charged, together with the clean electric power information for that charging station.

According to the configuration described above, the location of the charging station at which the electric vehicle can be charged with the electric power including the clean electric power is displayed using the charge enablement sign in the map which is displayed by the display device, together with the clean electric power information. Accordingly, the occupant of the electric vehicle can head to the clean electric power charging station, based on the charge enablement sign and the clean electric power information, displayed in the map.

In this case, the clean electric power information may be displayed separately from the charge enablement sign, or may be displayed integrally with the charge enablement sign. In addition, the clean electric power information may be displayed/expressed in a display manner of the charge enablement sign. For example, the clean electric power information may be expressed by a size of the charge enablement sign. Further, it is preferable that a change in the size of the charge enablement sign indicates whether or not the electric vehicle can be charged with the electric power including the clean electric power at the charging station which is displayed by that charge enablement sign. For example, the size of the charge enablement sign indicating the "charging station at which the electric vehicle can be charged with the electric power including the clean electric power" may be larger than the size of the charge enablement sign indicating the "charging station at which the electric vehicle cannot be charged with the electric power including the clean electric power." According to the above aspect, the occupant of the electric vehicle can determine/judge whether or not the electric vehicle can be charged with the electric power including the clean electric power at the charging station displayed by the charge enablement sign, based on the display manner (e.g. the size, or the like) of the charge enablement sign displayed on the display device. In addition, since the charge enablement sign indicating the charging station at which the electric vehicle can be charged with the electric power including the clean electric power is displayed in a large size (more largely), it is possible to have the occupant of the electric vehicle readily recognize the charging station at which the electric vehicle can be charged with the electric power including the clean electric power in the display device.

In the invention described above, the "display device" may be any device, as long as it can display a map. Especially, it is preferable that the display device can display the map in such a manner that the present position (current location) of the vehicle which is being driven by the occupant is displayed in the map. For example, an on-board display mounted on the electric vehicle, or an information terminal carried by the occupant of the electric vehicle, can be used as the "display device", but the display device is not limited thereto.

In addition, the charging information-providing apparatus of the present invention may search for a clean electric power charge priority running route, which is a running route of the electric vehicle to a destination, and which passes through the clean electric power charging station at which the electric vehicle can be charged with the electric power including the clean electric power, and may display the clean electric power charge priority running route in the map displayed on the display device.

In this case, it is preferable the charging information-providing apparatus of the present invention have a function to search for the clean electric power charge priority running route when the occupant of the electric vehicle requires/requests a route guidance to the destination, and to guide the electric vehicle according to the searched route. Further, it is preferable that the charging information-providing apparatus search for a plurality of routes which includes the clean electric power charge priority running route, and display a plurality of display-buttons for displaying any one of a plurality of the searched running routes. It is preferable that, among a plurality of those display-buttons, the display-button for displaying the clean electric power charge priority running route is displayed most noticeably (in the most eye catching manner). Further, it is preferable that the charging information-providing apparatus of the present invention have a function to guide the electric vehicle to the destination according to the clean electric power charge priority running route when the clean electric power charge priority running route is selected from a plurality of the searched running routes.

According to the configuration described above, since the electric vehicle can be driven along the clean electric power charge priority running route, it passes through the clean electric power charging station before it reaches the destination. Therefore, the occupant of the electric vehicle can charge the electric vehicle with the electric power including the clean electric power at a clean electric power charging station through which the electric vehicle passes in the way to the destination.

In the present invention described above, the "clean electric power charging station" may be a charging station at which the electric vehicle can be charged with electric power which includes a predetermined amount or more of the clean electric power. For example, a charging station at which the electric vehicle can be charged with electric power having the ratio (clean degree described later) of an amount of the clean electric power to a total amount of the electric power with which the electric vehicle can be charged at the charging station is equal to or higher than the predetermined ratio (reference clean degree) may be the clean electric power charging station.

It is preferable that the clean electric power information be the clean degree which represents a ratio of the clean electric power to the electric power used for the charge of the electric vehicle. This enables the occupant of the electric vehicle to compare the clean degrees to each other when a plurality of the charging station information is provided together with their clean degrees. This allows the occupant to go to the charging station at which the electric vehicle is charged with the electric power having the largest clean degree, and to charge the electric vehicle with the electric power including a larger amount of the clean electric power there.

The "clean degree" indicates the ratio of the clean electric power to the electric power used for charging the electric vehicle by the charging station. For example, the clean degree may be represented by integers from 0 to 10. The clean degree may vary in proportion to the above described ratio, but may not vary in proportion to the above described ratio.

Further, it is preferable the charging information-providing apparatus of the present invention searches for a high clean degree charging station at which the vehicle can be charged with electric power having a clean degree higher than a home clean degree representing a ratio of the clean electric power to the electric power used for charging the electric vehicle at a home of the occupant, when the electric vehicle is running along a returning road to the home of the occupant. It is also preferable to provide, to the occupant of the electric vehicle, the charging station information together with the clean electric power information, by displaying, at a position corresponding to a location of the high clean charging station in the map displayed on the display device capable of displaying the map, a charge enablement sign indicating that a place corresponding to the sign is a place where the electric vehicle can be charged, together with the clean degree of the high clean degree charging station. In this case, the charging information-providing apparatus may display the charge enablement sign together with the clean degree at the position corresponding to the location of the high clean degree charging station in the map displayed on the display device, when the electric vehicle is running along the returning road to the home, and a remaining charge amount of a battery mounted on the electric vehicle for driving the vehicle is equal to or smaller than a predetermined amount for indicating that the remaining charge amount is small.

This configuration allows the occupant of the electric vehicle to stop by the high clean degree charging station on his/her way home by the electric vehicle, and to charge the electric vehicle there. Accordingly, a larger amount of the clean electric power can be charged compared with the case in which the electric vehicle is charged at his/her home.

Further, the present invention provides a charging information-providing apparatus for providing information relating to charging for an electric vehicle, wherein the apparatus provides, to an occupant of the electric vehicle, clean electric power supply information indicating whether or not electric power supplied from an electric power source includes clean electric power generated by a power generation method defined as a power generation method which provides a low burden to environment, together with area information representing an area to which the electric power is supplied from the electric power source.

According to the present invention, the clean electric power supply information indicating whether or not the electric power supplied from the electric power source includes the clean electric power, as well as the area information representing the area to which the electric power is supplied from the electric power source, are provided to the occupant of the electric vehicle. The occupant of the electric vehicle, based on the provided information, can go to the area where the electric power including the clean electric power can be used for charging, and can charge the electric vehicle with the electric power including the clean electric power at a charging station located in that area. Accordingly, the electric vehicle can be charged with the electric power including the clean electric power, and thus, the demand for the clean electric power serving as the electric power for charging electric vehicles can be increased. As the demand for the clean electric power increases, the price of the clean electric power decreases, and therefore, spreading the clean electric power is accelerated so as to contribute to the environmental protection.

In the present invention, for example, the "electric power source" may be an electric power company, which owns power generation facilities and which supplies electric power generated by the power generation facilities to electric power consuming facilities of consumers. In a case in which there are a plurality of the electric power companies in one country, each of the electric power companies supplies the electric power to each of the areas to which each of the companies is assigned. Thus, depending upon whether or not the power generation facilities of each of the electric power companies generate the clean electric power, the clean electric power supply information for the area (electric power supplied area) to which the electric power is supplied from each of the electric power companies differs.

It should be noted that a unified system where power generation facilities, transformer substations, electricity transmission systems, electricity distribution systems, are consolidated for supplying electric power to consuming facilities of consumers, is referred to as an "electric power system." In a case in which there are a plurality of the electric power systems in one country, each of the electric power systems supplies the electric power to the power consuming facilities of the consumers in each of the areas to which each of the electric power systems is assigned. Therefore, the "electric power source" may be the "electric power system."

Further, it is preferable that the charging information-providing apparatus of the present invention provide, to the occupant of the electric vehicle, the clean electric power supply information together with the area information, by displaying, in a map displayed on a display device capable of displaying the map, a clean electric power supplied area to which electric power including the clean electric power is supplied from the electric power source in such a manner that the clean electric power supplied area can be differentiated from an un-clean electric power supplied area to which electric power which does not include the clean electric power is supplied from an electric power source. According to this configuration, the clean electric power supplied area is displayed in such a manner that the area can be differentiated from the un-clean electric power supplied area , for example, using different colors (color-coding). Therefore, this can make the occupant of the electric vehicle clearly recognize the clean electric power supplied area.

The clean electric power supplied area may be an area to which electric power which includes a predetermined (constant) amount or more of the clean electric power is supplied from the electric power source. Further, the un-clean electric power supplied area may be an area to which electric power which does not include the predetermined (constant) amount or more of the clean electric power is supplied from the electric power source.

In addition, the charging information-providing apparatus of the present invention may search for a clean electric power supplied area passing priority running route, which is a running route of the electric vehicle to a destination, and which passes through the clean electric power supplied area, and display the clean electric power supplied area passing priority running route in the map displayed on the display device.

According to the configuration described above, since the electric vehicle can be driven along the clean electric power supplied area passing priority running route, the electric vehicle passes through the clean electric power supplied area before it reaches the destination. Therefore, the occupant of the electric vehicle can charge the electric vehicle with the electric power including the clean electric power at the power charging station located in the clean electric power supplied area through which the electric vehicle passes on the way to the destination.

Further, the charging information-providing apparatus (30, 40) of the present invention may be configured to comprise:
a charging information obtaining section (S101) which obtains charging station information representing a charging station where the electric vehicle can be charged, together with clean electric power information which is information indicating whether or not electric power with which the electric vehicle can be charged at the charging station includes clean electric power generated by a power generation method defined as a power generation method which provides a low burden to environment; and
a charging information-providing section (S105, S106, 30) which provides, to an occupant of the electric vehicle, the charging station information together with the clean electric power information obtained by the charging information obtaining section.

In this case, it is preferable that the charging station information include information indicating a location of the charging station. Further, the charging information-providing section may be configured to comprise a display device (30) capable of displaying a map, and to provide, to the occupant of the electric vehicle, the charging station information together with the clean electric power information, by displaying, at a position corresponding to the location of the charging station in the map displayed on the display device, a charge enablement sign (mark) indicating that a place corresponding to the sign is a place where the electric vehicle can be charged, together with the clean electric power information for that charging station.

Further, the electric charging information-providing apparatus may comprise a running route search section (S204) which searches for, based on the charging station information and the clean electric power information obtained by the charging information obtaining section, a clean electric power charge priority running route, which is a running route of the electric vehicle to the destination, and which passes through the clean electric power charging station which is the charging station at which the electric vehicle can be charged with the electric power including the clean electric power, wherein the charging information-providing section may display the clean electric power charge priority running route in the map displayed on the display device. In this case, the clean electric power charging station may be a charging station whose clean degree is equal to or higher than a predetermined standard (reference) clean degree. Further, the charging information-providing section may comprise a running route guidance section (44) which guides the electric vehicle according to the clean electric power charge priority running route searched out by the running route search section.

Further, the charging information-providing apparatus may comprise a high clean degree charging station search section (S302) which searches for, based on the charging station information and the clean degree obtained by the charging information obtaining section, a high clean degree charging station at which the vehicle can be charged with electric power having a clean degree higher than a home clean degree representing a ratio of the clean electric power to the electric power with which the electric vehicle is charged at a home of the occupant, and the charging information-providing section may provide, to the occupant of the electric vehicle, the charging station information together with the clean electric power information, by displaying, at a position corresponding to a location of the high clean charging station in the map displayed on the display device, a charge enablement sign indicating that the place corresponding to the sign is a place where the electric vehicle can be charged, together with the clean degree for that high clean degree charging station, while the electric vehicle is running along a returning road to the home of the occupant.

Further, the charging information-providing apparatus may be configured so as to comprise:
an electric power supply information obtaining section (S401) which obtains clean electric power supply information which is information indicating whether or not electric power supplied from an electric power source includes a clean electric power generated by a power generation method defined as a power generation method which provides a low burden to environment, together with area information representing an area to which the electric power is supplied from the electric power source; and
an electric power supply information providing section (S405, S406, 30) which provides, to the occupant of the electric vehicle, the clean electric power supply information obtained by the electric power supply information obtaining section together with the area information.

In this case, the electric power supply information providing section may be configured so as to comprise a display device capable of displaying a map, and so as to provide, to the occupant of the electric vehicle, the clean electric power supply information together with the area information, by displaying, in the map displayed on the display device, a clean electric power supplied area to which electric power which includes the clean electric power is supplied from the electric power source, in such a manner that the clean electric power supplied area can be differentiated from an un-clean electric power supplied area to which electric power which does not include the clean electric power is supplied from an electric power source.

Furthermore, the charging information-providing apparatus may comprise a running route search section (S502) which searches for, based on the clean electric power supply information and the area information obtained by the electric power supply information obtaining section, a clean electric power supplied area passing priority running route, which is a running route of the electric vehicle to a destination, and which passes through the clean electric power supplied area. Further, the charging information-providing section may display the clean electric power supplied area passing priority running route in the map displayed on the display device. In addition, the charging information-providing apparatus may comprise a running route guidance section (44) which guides the electric vehicle according to the clean electric power supplied area passing priority running route searched out by the running route search section.

The charging information-providing apparatus of the present invention may be provided to the electric vehicle, or to an information terminal carried by the occupant of the electric vehicle. Alternatively, the charging information-providing apparatus of the present invention may be provided to an outside facility, such as an information management center established so as to provide the charging information to the electric vehicle, and the like. In this case, the information relating to the charge is transmitted to the electric vehicle from the outside facility via a transmitting section, or the like, and the transmitted information is provided to the occupant of the electric vehicle.

### BRIEF DESCRIPTION OF THE DRAWINGS

[FIG. 1] FIG. 1 is a schematic view showing a transmitting (communication) state between an electric vehicle and an information management center.
[FIG. 2] FIG. 2 shows an example of a list of charging station relating information stored in a database of the information management center.
[FIG. 3] FIG. 3 is a schematic view showing portions relating to the present invention of internal configurations of the electric vehicle.
[FIG. 4] FIG. 4 is a view showing internal configurations of a control unit by dividing them into each function.
[FIG. 5] FIG. 5 is a flowchart showing a display control routine executed by a display control section of a first embodiment to control a display of an on-board display.
[FIG. 6] FIG. 6 shows an example of a screen displayed on the on-board display when the display control section of the first embodiment executes the display control routine.
[FIG. 7] FIG. 7 shows another example of the screen displayed on the on-board display when the display control section of the first embodiment executes the display control routine.
[FIG. 8] FIG. 8 shows still another example of the screen displayed on the on-board display when the display control section of the first embodiment executes the display control routine.
[FIG. 9] FIG. 9 is a flowchart showing a route guidance processing routine executed by a route guidance section of the first embodiment in order to guide the electric vehicle from a preset position to a destination.
[FIG. 10] FIG. 10 shows a running route selection screen displayed on the on-board display.
[FIG. 11] FIG. 11 is a flowchart showing a routine to urge charging when returning home executed by the display control section of the first embodiment.
[FIG. 12] FIG. 12 shows an example of a screen displayed on the on-board display when the display control section of the first embodiment executes the routine to urge charging when returning home.
[FIG. 13] FIG. 13 is a flowchart showing a display control routine executed by a display control section of a second embodiment in order to control a display of the on-board display.
[FIG. 14] FIG. 14 shows an example of a power supply table.
[FIG. 15] FIG. 15 shows an example of a screen displayed on the on-board display when the display control section of the second embodiment executes the display control routine.
[FIG. 16] FIG. 16 is a flowchart showing a route guidance processing routine executed by a route guidance section of the second embodiment in order to guide the electric vehicle from a preset position to a destination.
[FIG. 17] FIG. 17 shows a running route selection screen displayed on the on-board display.

### DESCRIPTION OF EMBODIMENTS

### <First embodiment>

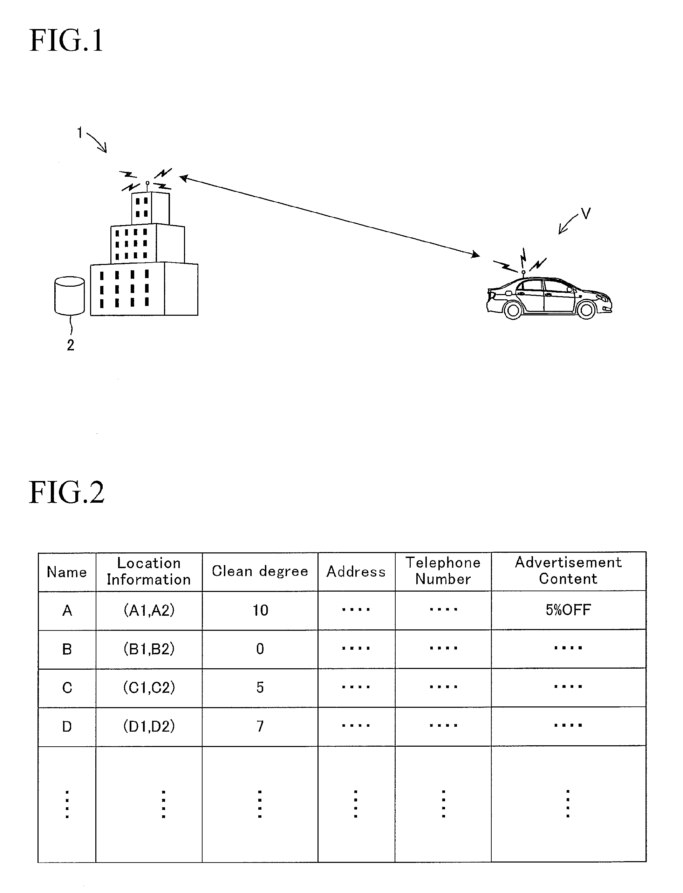

A first embodiment according to the present invention will next be described. FIG. 1 is a schematic view showing a transmitting (communication) state between an electric vehicle V and an information management center 1 which transmits information relating to charging to the electric vehicle V.

The information management center 1 transmits the information relating to charging of the electric vehicle V to the electric vehicle V. As shown in FIG. 1, the information management center 1 has a database 2. The database 2 stores information relating to a plurality of charging stations, each having a charger capable of charging the electric vehicle V (hereinafter, referred to as charging station relating information). The charging station relating information includes information (location information) representing/indicating a location of the charging station and a clean degree. Here, the "clean degree" indicates/means a ratio of clean electric power to electric power used to charge the electric vehicle V at the charging station. The "clean electric power" is electric power generated by a power generation method defined as a power generation method which provides a low burden to environment. For example, electric power generated by a power generation method which emits CO₂ emission by an amount smaller than a definite reference amount when generating the electric power can be the "clean electric power." Examples of the clean electric power may include an electric power generated by a power generation utilizing natural energy, such as a photovoltaic power generation, a geothermal power generation, a wind force power generation, and a hydroelectric power generation; and an electric power (e.g., electric power generated by a fuel cell power generation) generated by developing a chemical reaction (e.g., a reaction where water is produced from Oxygen and Hydrogen) which does not generate a large amount of substance (e.g., CO₂) having a great impact on environment. In contrast, the thermal power generation emits a large amount of CO₂ since the fossil fuel is burnt when generating the electric power. Accordingly, the electric power generated by the thermal power generation is not the clean electric power, but is un-clean electric power.

The clean degree can be represented by integers from 0 to 10, for example. In this case, as a numerical value of the integer becomes larger (or smaller), the clean degree may become higher. For example, the clean degree for a charging station at which the electric vehicle V is charged with the clean electric power only may be 10, and the clean degree for a charging station at which the electric vehicle V is charged with the un-clean electric power only may be 0. The clean degree for a charging station at which the electric vehicle is charged with electric power, a half of the power being the clean electric power, and the rest half of the power being the un-clean electric power, may be 5.

The charging station relating information stored in the database 2 may include information specifying a name, a telephone number, and an address, of the charging station. It should be noted that, in the present embodiment, the charging station may be a business facility which exclusively runs a business for charging electric vehicles V, or may be a business facility which runs a business for charging electric vehicles V while running the other business. For example, a convenience store or a fast food restaurant is (qualified as) the charging station, if the business manager of the convenience store or the fast food restaurant runs a business for charging electric vehicles using a charger(s) equipped at a parking lot of those stores. In addition, a standard home belongs to the charging station if the standard home is equipped with the charger for charging the electric vehicle V.

The charging station relating information may be transmitted from each of the charging stations to the information management center 1. In this case, the transmitted charging station relating information is stored in the database 2. Further, staff members of the information management center 1 may take a survey for the charging station relating information for each charging station, and register it in the database 2.

FIG. 2 shows an example of a list of charging station relating information stored in the database 2. As shown in FIG. 2, the charging station relating information includes the name, the location information (information indicating a location of a charging station), the clean degree, the address, and the telephone number, of the charging station. The location information may be coordinate values used to display the location of the charging station in a map. The location information corresponds to a charging station information of the present invention.

The charging station relating information stored in the database 2 is appropriately transmitted to the electric vehicle V, using a transmission function which the information management center 1 has. In this case, the charging station relating information may be transmitted to the electric vehicle V while it is being driven (running). Further, the charging station relating information may be transmitted to the electric vehicle V when the vehicle V is in the neighborhood of the information management center 1 (e.g., within a circle of radius 10 km, the circle having its center at the information management center 1). Furthermore, the charging station relating information may be transmitted to the electric vehicle V in response to a request from the electric vehicle V.

Further, all or a part of the charging station relation information stored in the database 2 may be transmitted to the electric vehicle V. For example, it is preferable that the charging station relating information for the charging stations located in the neighborhood of the electric vehicle V (e.g., the charging stations within a circle of radius 100 km, the circle having its center at the electric vehicle V) be transmitted to the electric vehicle V. A computer included in the information management center 1 may perform a calculation to determine what kind of the charge relating information is transmitted to the electric vehicle V. Alternatively, the staff members of the information management center 1 may determine the charging station relating information to be transmitted to each of the electric vehicles V.

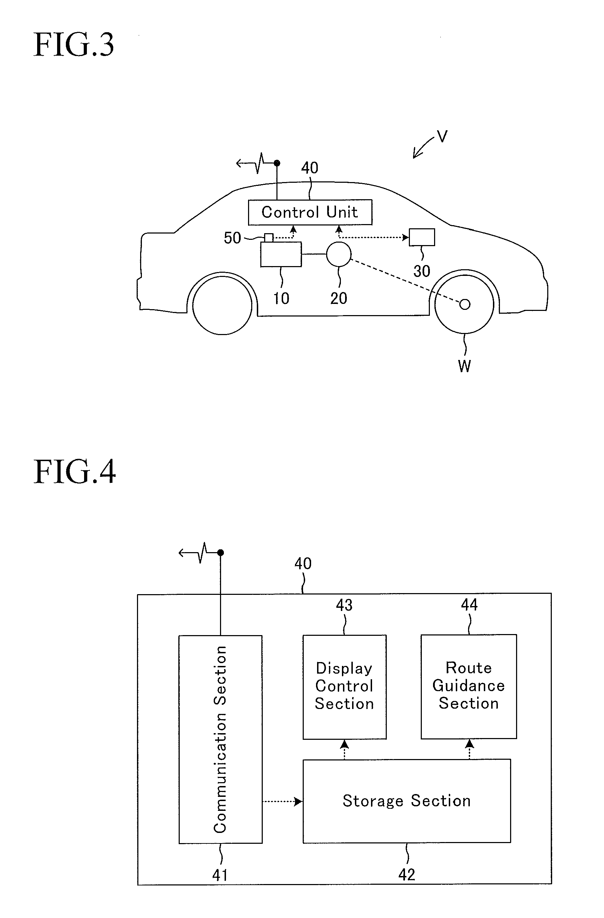

FIG. 3 is a schematic view showing portions relating to the present invention among internal configurations of the electric vehicle V. As shown in FIG. 3, the electric vehicle V comprises a rechargeable battery 10, an electric motor 20, an on-board display 30, a control unit 40, and an SOC detecting sensor 50. The on-board display 30 and the control unit 40 correspond to the charging information-providing apparatus and the charging information-providing section, of the present invention.

The battery 10 supplies electric power to the electric motor 20. The electric motor 20 is rotatably driven by the electric power supplied from the battery 10. The rotational driving force of the electric motor 20 is transmitted to wheels W so that the electric vehicle V runs.

The on-board display 30 is installed at a position in the vehicle interior which allows an occupant (especially, a driver) of the electric vehicle V to easily look at the on-board display 30. The control unit 40 is a microcomputer including a CPU, a ROM, and a RAM, as its main components. The control unit 40 has a function to perform a display control for the on-board display 30. The SOC sensor 50 is attached to the battery 10. The SOC sensor 50 detects a charging ratio (SOC: State Of Charge) of the battery 10 so as to output the detected SOC to the control unit 40.

FIG. 4 is a view showing internal configurations of the control unit 40 while dividing them into each function. As shown in FIG. 4, the control unit 40 has a communication section 41, a storage section 42, a display control section 43, and a route guidance section 44.

The communication section 41 is configured so as to be capable of communicating with the communication function part of the information management center 1 to receive, via the communication function part of the information management center 1, the charging station relating information stored in the database 2. The communication section 41 outputs the received charging station relating information to the storage section 42. The storage section 42 stores the input charging station relating information. In the storage section 42, necessary information (e.g., map data information) other than the charging station relating information is stored. The display control section 43 controls a display of the on-board display 30. The route guidance section 44 searches for a route for the electric vehicle V to reach a destination from a present position, and guides the electric vehicle V according to the searched route. The display control section 43 obtains information necessary for the display control of the on-board display 30 from the storage section 42. The route guidance section 44 obtains information necessary for the guidance/navigation of the electric vehicle V form the storage section 42

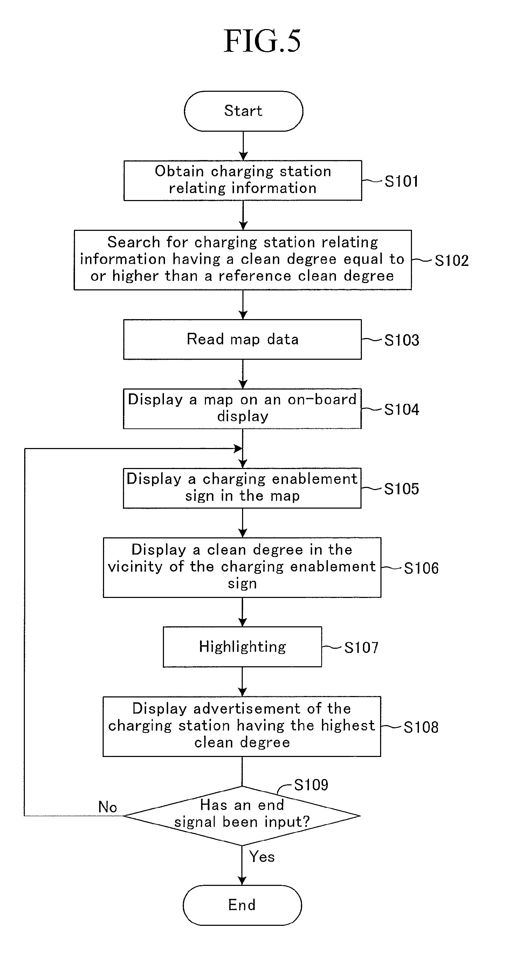

While the electric vehicle V is running, the display control section 43 performs the display control for the on-board display 30. FIG. 5 is a flowchart showing a display control routine executed by the display control section 43 in order to perform the display control for the on-board display 30.

The display control for the on-board display 30 by the display control section 43 will next be described with reference to FIG. 5. After the routine shown in FIG. 5 is started, the display control section 43 firstly obtains the charging station relating information for a plurality of the charging stations, stored in the storage section 42, at step (hereinafter, step is abbreviated as S) 101. Subsequently, the display control section 43 narrows down (filters) the charging station relating information obtained at S101 using a narrowing-down condition (filtering condition) that the clean degree is equal to or higher than the reference clean degree (S102). The charging station relating information having the clean degree equal to or higher than the reference clean degree is searched (found) out by this narrowing-down search. It should be noted that the reference clean degree may be set at any one of numerical values from 1 to 9 (e.g., 3) when the clean degree is expressed by integers from 1 to 10, and when the clean degree becomes higher as the numerical value becomes larger. The reference clean degree may be optionally set by the occupant of the electric vehicle V.

Subsequently, the display control section 43 reads the map data, stored in the storage section 42 in advance (S103). The map data stored in the storage section 42 may be updated to the last map data as needed by the external communication. Thereafter, the display control section 43 controls the on-board display 30 in such a manner that the map covering the present position of the electric vehicle V is displayed on the on-board display 30 (S104). It should be noted that a GPS device is equipped in the electric vehicle V. The present position of the electric vehicle V is specified/determined based on information obtained from the GPS device.

Subsequently, the display control section 43 controls the on-board display 30 (S105) in such a manner that a charge enablement sign is displayed at a position in the map displayed on the on-board display 30, the position corresponding to the location specified by the location information included in the charging station relating information which has been narrowed down at step S102. It should be noted that the charge enablement sign may not be displayed in the map, when the location specified by the location information of the charging station is out of the range of the map displayed on the on-board display 30.

Subsequently, the display control section 43 controls the on-board display 30 (S106) in such a manner that the clean degree for the charging station corresponding to the charge enablement sign displayed in a superimposed manner in the map on the on-board display 30 is displayed at a position in the vicinity of the displayed charge enablement sign.

Subsequently, the display control section 43 proceeds to S107 to perform a highlighting process. The highlighting process changes a size of the charge enablement sign representing (indicating) the location of the charging station according to a magnitude of the clean degree. In the present embodiment, the charge enablement sign is displayed on the on-board display 30 in such a manner that the size of the charge enablement sign becomes larger as the clean degree becomes larger. That is, the charge enablement sign representing the charging station at which the electric vehicle V can be charged with the electric power including the clean electric power is displayed more largely than the charge enablement sign representing the charging station at which the electric vehicle V cannot be charged with the electric power including the clean electric power (at which the electric vehicle V can be charged with the electric power which does not include the clean electric power). It should be noted that a color or a shape of the charge enablement sign may be changed in accordance with the clean degree.

Thereafter, the display control section 43 controls the on-board display 30 (S108) in such a manner that advertising information of the charging station having the highest clean degree among the charging stations displayed on the on-board display 30 is displayed. Subsequently, the display control section 43 determines whether or not an end signal is input (S109). The end signal is input, when, for example, driving of the electric vehicle V is stopped. If the end signal is not input (S109: No), display control section 43 returns to S105, and repeats the processes from S105 to S109. In this case, when the area/range of the map displayed on the on-board display 30 changes according to a running of the electric vehicle V, the display control section 43 displays the charge enablement sign at a position corresponding to the location of the charging station in the map area which has been changed (S105), displays the clean degree in the vicinity of the displayed charge enablement sign (S106), changes the size of the charge enablement sign in accordance with the magnitude of the clean degree (S107), and displays the advertising information of the charging station having the highest clean degree (S108). When it is determined that the end signal is input at S109 (S109: Yes), the display control section 43 ends the present routine.

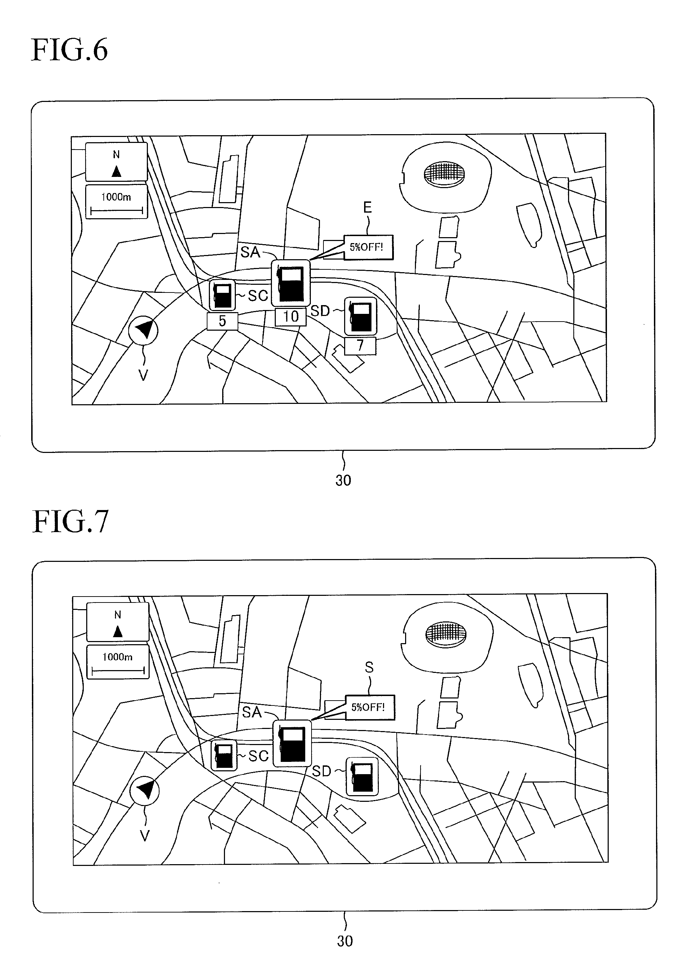

FIG. 6 shows an example of a screen displayed on the on-board display 30 when the display control section 43 executes the above described display control routine. As shown in FIG. 6, the map covering the position of the electric vehicle V is displayed on the on-board display 30. The position and a running direction of the electric vehicle V are indicated by a sign (mark) V shown in FIG. 6.

In addition, the charge enablement signs SA, SC, and SD are displayed in a superimposed manner in the map. The positions specified by the charge enablement signs SA, SC, and SD indicate the locations of the charging stations represented by the names of A, C, and D, shown in the list of the charging station relating information in FIG. 2, respectively.

Further, each of the clean degrees is displayed in the vicinity of each of the charge enablement signs SA, SC, and SD. In the present embodiment, the clean degree of the charging station A is 10, the clean degree of the charging station C is 5, and the clean degree of the charging station D is 7. It should be noted that the charging station B is excluded from the searched charging stations by the process of S102 shown in FIG.5, since the clean degree of the charging station B is 0. Therefore, in the present embodiment, the charge enablement sign representing the charging station B is not displayed in the map. Note, however, that the charge enablement sign SB representing the charging station B may be displayed together with its clean degree. In this case, the process of S102 shown in FIG. 5 is omitted.

Furthermore, each of the sizes of the charge enablement signs SA, SC, and SD depends on each of the magnitudes of the clean degrees used when the electric vehicle V is charged at each of the charging stations A, C, and D. That is, the size of the charge enablement sign is larger, as the magnitude of the clean degree is larger. Since the clean degree of the charging station A is 10, the clean degree of the charging station C is 5, and the clean degree of the charging station D is 7, the charge enablement sign representing the charging station A is largest, the charge enablement sign representing the charging station D is the secondary largest, and the charge enablement sign specifying the charging station C is the smallest one. In addition, the advertising information E of the charging station A having the highest clean degree is displayed in the map, while being related to the charge enablement sign SA.

In the above described manner, according to the present embodiment, the charging information-providing apparatus (the on-board display 30 and the control unit 40) is configured in such a manner that the information (charge enablement sign) indicating the location of the charging station and the information (the clean degree, the size of the charge enablement sign) indicating whether or not the electric vehicle can be charged with the clean electric power at the charging station are provided to the occupant of the electric vehicle V through the on-board display 30. Accordingly, based on the provided location information of the charging station and the provided clean degree, the occupant of the electric vehicle V can go to the charging station at which the electric power including the clean electric power can be used to charge the electric vehicle, and can charge the electric power including the clean electric power. Accordingly, the electric vehicle can be charged with the electric power including the clean electric power, and thus, the demand for the clean electric power serving as the electric power for charging electric vehicles V can be increased.

Furthermore, the charge enablement signs, each indicating each of the locations of a plurality of the charging stations, together with the clean degrees of the corresponding charging stations, are displayed on the on-board display 30. The occupant of the electric vehicle can compare the clean degrees to each other. Thereafter, for example the occupant can go to the charging station at which the electric vehicle can be charged with the electric power having the highest clean degree, so as to charge the electric vehicle with the electric power including a larger amount of the clean electric power.

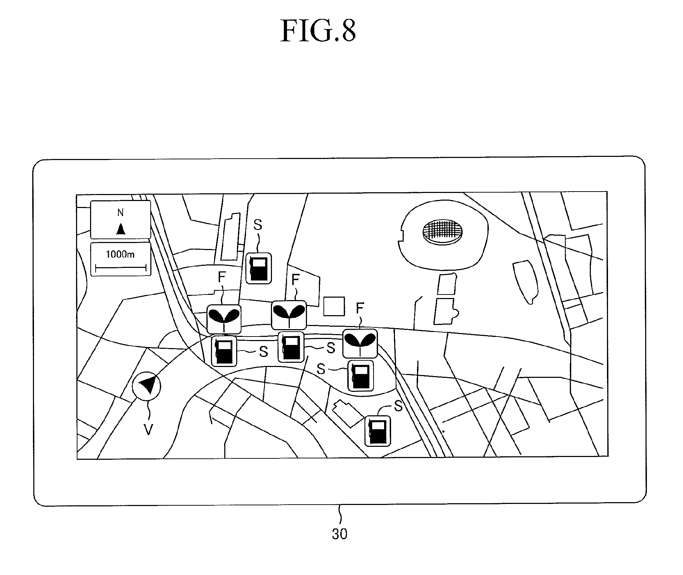

FIGs. 7 and 8 show another examples of the screen displayed on the on-board display 30 when the display control section 43 executes the above described display control routine. As shown in FIG. 7, displaying the clean degree of each of the charging station A, C, and D is omitted. Each of the clean degrees of each of the charging stations A, C, and D is displayed by the size of each of the charge enablement signs SA, SC, and SD, indicating each of the locations of the charging stations A, C, and D, respectively. In the example shown in FIG. 7, the clean degree of the charging station A is the highest, since the size of the charge enablement sign SA is the largest. In contrast, the clean degree of the charging station C is the lowest, since the size of the charge enablement sign SC is the smallest. In this manner, according to the screen shown in FIG. 7 as well, the information (charge enablement sign) indicating the location of the charging station and the information (the clean degree specified by the size of the charge enablement sign) indicating whether or not the electric vehicle can be charged with the clean electric power at that charging station are provided to the occupant of the electric vehicle V.

Also, as shown in FIG. 8, not only a clean electric power charging station having the clean degree equal to or higher than the reference clean degree but also the charging station (an un-clean electric power charging station) having the clean degree lower than the reference clean degree may be displayed on the on-board display 30. In this case, the clean electric power charging station is displayed so as to be differentiated from the un-clean electric power charging station. For example, as shown in FIG. 8, the un-clean electric power charging station is displayed only with the charge enablement sign S, whereas the clean electric power charging station is displayed with the charge enablement sign S and a clean power sign F indicating that the clean electric power having the clean degree equal to or higher than the reference clean degree can be used to charge the electric vehicle. In this manner, according to the screen shown in FIG. 8 as well, the information (the charge enablement sign S) indicating the location of the charging station and the information (the clean electric power sing F) indicating whether or not the electric vehicle can be charged with the clean electric power at that charging station are provided to the occupant of the electric vehicle V.

The control unit 40 comprises the route guidance section 44 having the function to guide the electric vehicle V to its destination. When the occupant of the electric vehicle V operates route guidance buttons provided on the on-board display, so that the destination of the electric vehicle V is set (that is, when the occupant of the electric vehicle V requests the guidance/navigation to the destination), the route guidance section 44 searches for a route(s) to the destination, and guides the electric vehicle V according to the searched route.

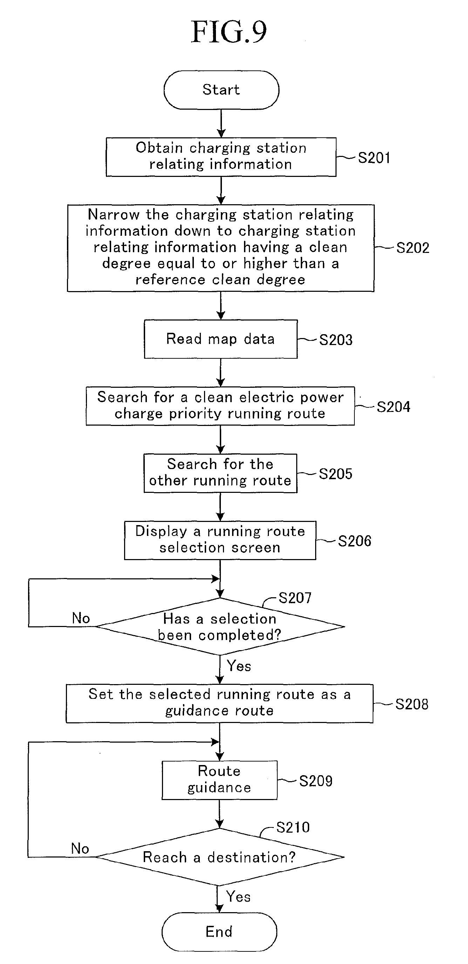

FIG. 9 is a flowchart showing a route guidance processing routine executed by the route guidance section 44 in order to guide the electric vehicle V from the present position to the destination. This routine is executed when the destination of the electric vehicle V has just been set. After this routine is started, the route guidance section 44 firstly obtains the charging station relating information stored in the storage section 42, at S201 shown in FIG. 9. Subsequently, the route guidance section 44 narrows down (filters) the charging station relating information obtained at S201 using the narrowing-down condition (filtering condition) that the clean degree is equal to or higher than the reference clean degree (S202). The charging station relating information corresponding to the charging station having the clean degree equal to or higher than the reference clean degree is searched (found) out by the narrowing-down search. It should be noted that the route guidance section 44 may perform a process to obtain the search result obtained by the narrowing down process executed by the display control section 43 at S102 shown in FIG. 5, in place of the processes of S201 and S202. Subsequently, the route guidance section 44 reads the map data stored in the storage section 42 in advance (S203).

Thereafter, the route guidance section 44 searches for a clean electric power charge priority running route (S204). The clean electric power charge priority running route is a running route, which is set so as to have the electric vehicle V reach from the present position to the destination, and which passes through the clean electric power charging station at which the electric vehicle V can be charged with the electric power including the clean electric power (the electric power having the clean degree equal to or higher than the reference clean degree). In the present embodiment, the route guidance section 44 searches for the clean electric power charge priority running route in a manner described below, for example.

Firstly, the route guidance section 44 searches for the shortest route from the present position to the destination of the electric vehicle V. Subsequently, the route guidance section 44 determines whether or not the electric vehicle V passes through one or more of the charging stations specified by the charging station relating information which has been narrowed down at S202, when (assuming that) the electric vehicle V runs along the shortest route. If the electric vehicle V passes through them, the route guidance section 44 set the shortest route as the clean electric power charge priority running route.

In contrast, if the electric vehicle V does not pass through any of the charging stations specified by the charging station relating information which has been narrowed down at S202 when the electric vehicle V runs along the shortest route, the route guidance section 44 searched for a route having a distance which is the second shortest distance with regard to the shortest route. Then, the route guidance section 44 determines whether or not the electric vehicle V passes through one or more of the charging stations specified by the charging station relating information which has been narrowed down at S202 when the electric vehicle V runs along that searched route. If the electric vehicle V passes through them, the route guidance section 44 set that route as the clean electric power charge priority running route. If not, the route guidance section 44 searches for a next shortest route and makes a determination similar to one described above.

As described above, the route guidance section 44 searches (finds) out the clean electric power charge priority running route. As a result, the shortest route which passes through the "charging station having the clean degree equal to or higher than the reference clean degree" narrowed down at S202 is set as the clean electric power charge priority running route. That is, the distance prioritized clean electric power charge priority running route is found at S204. It should be noted that, in place of the distance prioritized clean electric power charge priority running route, a time prioritized clean electric power charge priority running route, a toll road prioritized clean electric power charge priority running, or the like, may be searched out.

Subsequently, the route guidance section 44 searches for the other route (S205). The other running route to be searched out may include a distance prioritized running route whose distance between the present position to the destination is the shortest, a time prioritized running route along which the electric vehicle V can reach the destination from the present position in the shortest time, a toll road prioritized running route which has the electric vehicle V utilize a toll road(s), or the like.

Subsequently, the route guidance section 44 displays a running route selection screen on the on-board display 30 (S206). On the running route selection screen, either one of the clean electric power charge priority running route found at S204 and the other running route found at S205, as well as display buttons for displaying each of those running routes are displayed. When the display button is operated, the running route displayed on the running route selection screen is switched.

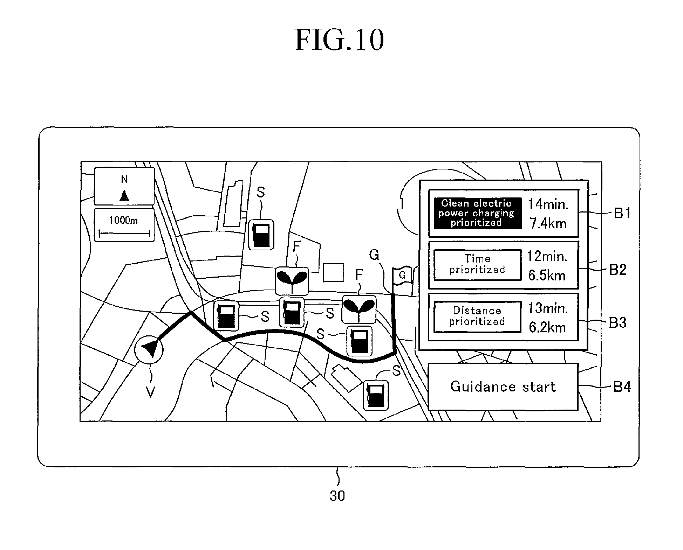

FIG. 10 shows the running route selection screen displayed on the on-board display 30. As shown in FIG. 10, in the running route selection screen, a map including the present position and the destination G of the electric vehicle V are displayed. In addition, the running route searched out by the route guidance section44 is displayed with a heavy line in a superimposed manner in the displayed map. Further, each of a display button B1 for displaying the clean electric power charge priority running route, a display button B2 for displaying the time prioritized running route, and a display button B3 for displaying the distance prioritized running route, is displayed in the running route selection screen. In this case, the display button B1 for displaying the clean electric power charge priority running route is displayed at an uppermost side in such a manner that the display button B1 is more noticeable to the occupant of the electric vehicle V than the other buttons B2 and B3. Furthermore, in an initial (default) screen of the running route selection screen (the running route selection screen in which any one of the display buttons B1, B2, and B3 has not been operated yet), the clean electric power charge priority running route is displayed. When the occupant of the electric vehicle V touches any one of the display buttons B1, B2, and B3, the running route corresponding to the touched button is displayed in a superimposed manner in the map. When the display button is touched, a color of background and a letter color are reversed. Accordingly, the occupant of the electric vehicle V can visually recognize that the running route corresponding to that display button is displayed. In the case shown in FIG. 10, the display button B1 has been touched, and thus, the clean electric power charge priority running route is being displayed in the map of the running route selection screen in a superimposed manner.

In addition, the locations of the charging stations are displayed in the map displayed on the running route selection screen shown in FIG. 10. In the example shown in FIG. 10, the location of the clean electric power charging station (the charging station having the clean degree equal to or higher than the reference clean degree) is displayed in such a manner that the location of the clean electric power charging station can be differentiated from the location of the un-clean electric power charging station (the charging station having the clean degree lower than the reference clean degree). More specifically, the location of the un-clean electric power charging station is displayed only with the charge enablement sign S, and the location of the clean electric power charging station is displayed with the charge enablement sign S and the clean electric power sign F. According to the example shown in FIG. 10, when the electric vehicle V runs along the clean electric power charge priority running route, it passes through two of the clean electric power charging stations.

After the route guidance section 44 displays the running route selection screen on the on-board display 30 at S206 shown in FIG. 9, the route guidance section 44 determines whether or not a selection of the running route has been completed (S207). It should be noted that a guidance start button B4 is also displayed in the running route selection screen, as shown in FIG. 10. When the guidance start button B4 is touched, selection of one of the running routes displayed on the running route selection screen at that point in time is completed.

When it is determined that the selection is completed at S207 (S207:Yes), the route guidance section 44 sets the selected running route as a guidance route to guide the electric vehicle V to the destination (S208), and guides (performs the route-guide) the electric vehicle V in accordance with the set guidance route (S209). When guiding the electric vehicle V, the display control section 43 executes the display control routine shown in FIG. 5 to display the set guidance route by a heavy line in a superimposed manner in the map in any one of the "screens shown in FIGs. 7, 8, and 9" displayed on the on-board display 30. In this manner, the electric vehicle V is guided to the destination using the guidance route displayed in the map in a superimposed manner, and a voice navigation.

Thereafter, the route guidance section 44 determines whether or not the electric vehicle V has reached the destination (S210). When the vehicle V has not reached the destination (S210: No), the route guide section 44 returns to S209 to continue to guide the electric vehicle V. When the vehicle V has reached the destination (S21 0: Yes), the route guide section 44 ends the present routine.

In this manner, according to the present embodiment, the clean electric power charge priority running route is searched/found by the route guidance section 44. The searched clean electric power charge priority running route is displayed in the running route selection screen of the on-board display 30. In addition, when the clean electric power charge priority running route is selected as the running route to the destination, the clean electric power charge priority running route is displayed as the guidance route in the map on the on-board display 30, and the electric vehicle V is guided to the destination according to the displayed clean electric power charge priority running route. When the electric vehicle V is guided in accordance with the clean electric power charge priority running route, the electric vehicle V passes through the clean electric power charging station(s) before it reaches the destination. In addition, the charge enablement sign is displayed at the position corresponding to the location of the clean electric power charging station(s) in the map displayed on the on-board display 30 while the guidance of the electric vehicle V is being performed, by the execution of the display control routine by the display control section 43. Accordingly, the occupant of the electric vehicle V can confirm the location(s) of the clean electric power charging station(s) through which the vehicle V passes, using the on-board display 30. Therefore, the occupant of the electric vehicle V can stop by the clean electric power charging station so as to charge the electric vehicle V with the clean electric power there.

In the case that the clean degree is displayed in the vicinity of the charge enablement sign resenting the clean electric power charging station displayed in the map on the on-board display 30, or the clean degree is expressed using the size of the charge enablement sign, the occupant of the electric vehicle V can determine the clean electric power charging station where the electric vehicle V is to be charged among a plurality of the clean electric power charging stations though which the electric vehicle V passes, based on the clean degree. Then, the occupant can stop by the determined clean electric power charging station and charge the electric vehicle V there. For example, the occupant can use the electric power including a larger amount of the clean electric power for charging the vehicle at the clean electric power charging station having the highest clean degree.

In the present embodiment, the charge enablement sign indicating the position corresponding to the location of the charging station in the map displayed on the on-board display 30 is displayed together with the information (the size of the charge enablement sign, the clean degree, the clean electric power sign) indicating whether the electric vehicle V can be charged with the clean electric power at that charging station. Those display functions can be realized by a "routine to urge charging when returning home" executed by the display control section 43 as described below, when the electric vehicle V is running along the returning road.

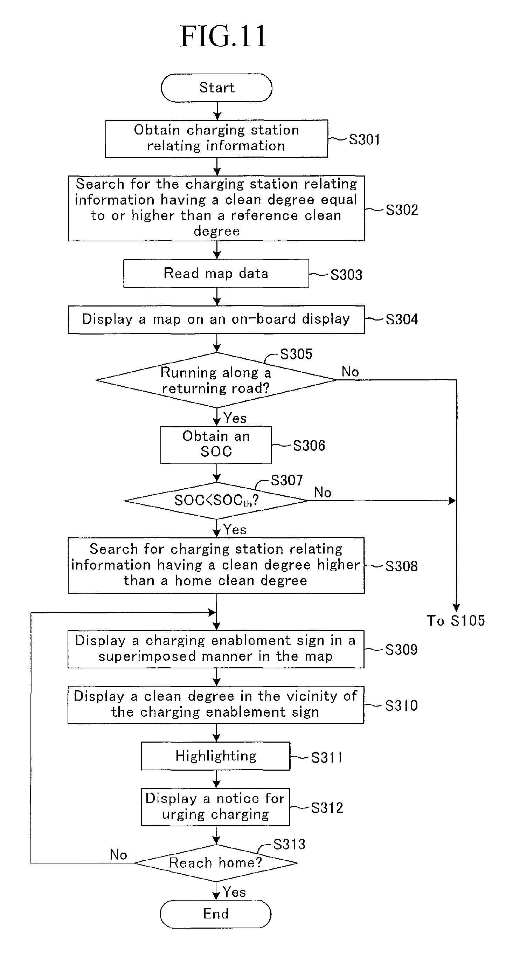

FIG. 11 is a flowchart showing the routine for urge charging when returning home executed by the display control section 43. After this routine is started, the display control section 43 firstly obtains the charging station relating information from the storage section 42, at S301 shown in FIG. 11. Subsequently, the display control section 43 searches for the charging station relating information having the clean degree equal to or higher than the reference clean degree among the obtained charging station relating information (S302). Thereafter, the display control section 43 reads the map data from the storage section 42 (S303), and displays the map covering the present position of the electric vehicle V on the on-board display 30 based on the read map data (S304).

Subsequently, the display control section 43 determines whether or not the electric vehicle V is running along the returning road (S305). Various methods can be used to determine whether or not the electric vehicle V is running along the returning road. For example, the section 43 can determine that the electric vehicle V is running along the returning road when the destination is the home while the route guidance section 44 is guiding the electric vehicle V to the destination. The section 43 can also determine that the electric vehicle V is running along the returning road when a map area (range) displayed on the on-board display 30 has changed from an area which does not cover the location of the home to an area which cover it. Further, the section 43 can determine that the electric vehicle V is running along the returning road when a straight-line (direct) distance between the present position and the home is decreasing. Furthermore, the section 43 can determine that the electric vehicle V is running along the returning road when the distance between the present position and the home has decreased down to a predetermined distance (e.g. 10 km) or less.

When it is not determined that the electric vehicle V is running along the returning road at S305 (S305: No), the display control section 43 proceeds to S105 shown in FIG. 5. Accordingly, the on-board display 30 is controlled by executing the processes following S105 shown in FIG. 5.

When it is determined that the electric vehicle V is running along the returning road at S305 (S305: Yes), the display control section 43 obtains the current SOC from the SOC detecting sensor 50 (S306). Subsequently, the section 43 determines whether or not the obtained SOC is smaller than a threshold SOCth (S307). The threshold SOCth is set in advance at a value of the SOC indicating that a remaining charge amount of the battery 10 mounted on the electric vehicle V is excessively small.

When it is determined that the SOC is equal to or larger than the threshold SOCth at S307 (S307: No), the display control section 43 proceeds to S105 shown in FIG. 5. Accordingly, the on-board display 30 is controlled by executing the processes following S105 shown in FIG. 5.

In contrast, when it is determined that the SOC is smaller than the threshold SOCth at S307 (S307: Yes), the display control section 43 searches for the charging station relating information having the clean degree higher than a home clean degree among the charging station relating information searched out at S302 (S308). The home clean degree is a clean degree of an electric power used when the electric vehicle V is charged at a home. The home clean degree is stored in the storage section 42 in advance. For example, when the home clean degree is 5, the charging station relating information having the clean degree higher than 5 is searched out.

Subsequently, the display control section 43 specifies the charging station represented by the charging station relating information searched out at S308 as a high clean degree charging station, and displays a charge enablement sign at a position corresponding to the location of the high clean degree charging station in the map displayed on the on-board display 30 (S309). Subsequently, the display control section 43 displays the clean degree of the high clean degree charging station represented by that displayed charge enablement sign in the vicinity of that sign (S310).

Subsequently, the display control section 43 controls, based on the clean degree, the on-board display in such a manner that the charge enablement sign and/or the clean degree, displayed on the on-board display 30 are highlighted (S311). Specifically, the on-board display 30 is controlled in such a manner that, as the magnitude of the clean degree of the high clean degree charging station is larger, the charge enablement sign indicating the station and/or the clean degree of the station are displayed more largely.

Subsequently, the display control section 43 controls the on-board display 30 in such a manner that a notice for encouraging/urging charging the electric vehicle V is displayed on the on-board display (S312). For example, the on-board display 30 is controlled in such a manner that a message "Please charge" and the remaining charge amount of the battery are displayed on the on-board display 30. It should be noted that, in place of the process of step S312, charging may be urged by a voice sound.

Subsequently, the display control section 43 determines whether or not the electric vehicle has reached the home (S313). If the vehicle V has not reached the home (S313: No), the section 43 returns to S309 so as to repeat the processes from S309 to S313. In contrast, if the vehicle V has reached the home (S313: Yes), the display control section 43 ends the present routine. It should be noted that, when the display control section 43 determines that the electric vehicle V is not running along the returning road while repeating the processes from S309 to S313, the section 43 may end the present routine.

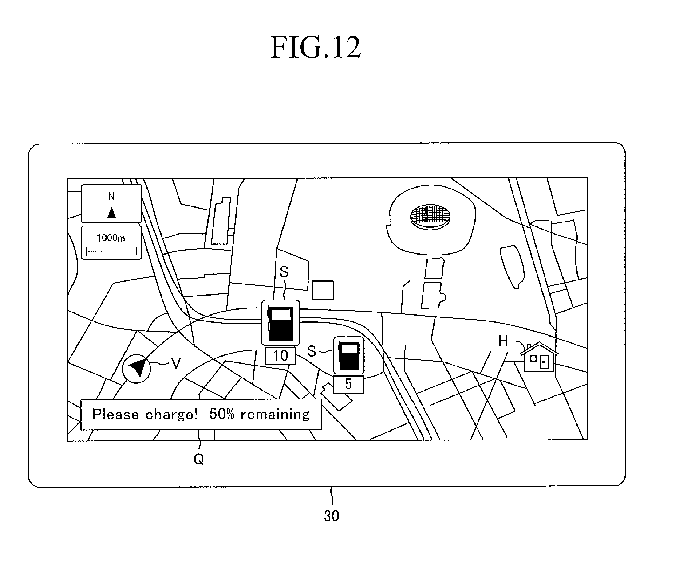

FIG. 12 shows an example of the screen displayed on the on-board display 30 when the display control section 43 executes the routine for urge charging when returning home. As shown in FIG. 12, the map is displayed on the on-board display 30, and signs indicating the present position of the electric vehicle V and the home H are displayed in a superimposed manner in the map. Further, each of the locations of the high clean degree charging station where the electric power having the clean degree higher than the home clean degree can be used for charging is displayed with the charge enablement sign S. In addition, the clean degree of the high clean degree charging station represented by the charge enablement sign S is shown in the vicinity of each of the charge enablement signs S. Further, a sign Q for urging charging the electric vehicle V is displayed on the on-board display 30. Accordingly, the occupant of the electric vehicle V can stop by the high clean degree charging station represented by the charge enablement sign S, and charge the electric vehicle V with the electric power having the clean degree higher than the home clean degree there, before returning to the home H. Further, the charge enablement sing S indicating the high clean degree charging station having the higher clean degree is displayed more largely so as to be more easily noticeable in the map displayed on the on-board display 30. Therefore, willingness of the occupant of the electric vehicle V to stop by the charging station represented by the more largely displayed charge enablement sing S is enhanced. As a result, a larger amount of the clean electric power can be used for charging at the charging station represented by the more largely displayed charge enablement sing S.

### <Second embodiment>

The above described first embodiment shows the example of the charging information-providing apparatus which provides, to the occupant of the electric vehicle, the charging station information together with the clean electric power information, by displaying the information (the charge enablement sign) indicating the location of the charging station in the map on the on-board display, together with the information (the size of the charge enablement sign, the clean degree, the clean electric power sign) indicating whether or not the clean electric power can be charged to the vehicle at that charging station. The second embodiment shows an example of the charging information-providing apparatus which provides a clean electric power supply information together with an area information to the occupant of the electric vehicle, by displaying information (clean electric power supply information) indicating whether or not electric power supplied from an electric power system (electric power source) includes the clean electric power and the area information representing an area to which the electric power is supplied from that electric power system, in the map on the on-board display.

In the present embodiment as well, the electric vehicle V communicates with the information management center 1 as shown in FIG. 1, so that the charging station relating information shown in FIG. 2 is transmitted to the electric vehicle V. In addition, the configuration of the electric vehicle V, the configuration of the control unit 40 are the same as those shown in FIGs. 3 and 4, described in the first embodiment. Thus, descriptions on them are omitted.

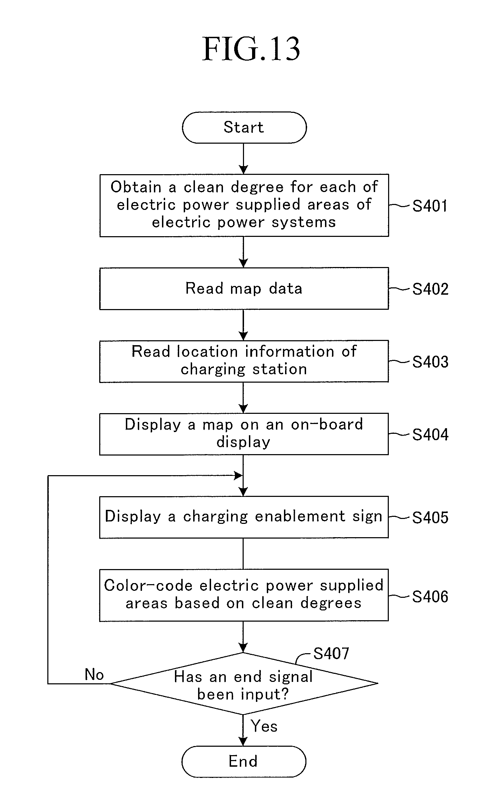

While the electric vehicle V is running, the display control section 43 of the control unit 40 executes a display control routine shown in FIG. 13 so as to control the on-board display 30. After the routine is started, the display control section 43 firstly obtains the clean degree for each of the electric power supplied areas of the electric power systems, from an electric supply table stored in the storage section 42 in advance (S401).

The electric power system represents a unified system where power generation facilities, transformer substations, electricity transmission systems, and electricity distribution systems, for supplying electric power to consuming facilities of consumers, are consolidated. A single electric power system supplies the electric power generated by the power generation facilities in the electric power system to an electric power supplied areas determined/assigned in advance. In a case that there is no power generation facility which generates the clean electric power in the electric power system, the clean degree of the electric power which is supplied to the electric power supplied area of that electric power system is 0. In contrast, in a case that all of the power generation facilities generate the clean electric power, the clean degree of the electric power which is supplied to the electric power supplied area of that electric power system is 10. In a case that the electric power system includes both the power generation facility generating the clean electric power and the power generation facility generating the un-clean electric power, the clean degree of the electric power which is supplied to the electric power supplied area of that electric power system is expressed to a value corresponding to a ratio of (an amount of) the generated clean electric power to (a total amount of) the generated electric power. The electric power supply table defines a relationship among each of the electric power systems, each of the electric power supplied areas of each electric power system, and the clean degree of the electric power supplied to each of the electric power supplied areas. The electric power supply table is stored in the database 2 of the information management center 1. The information management center 1 transmits the electric power table stored in the database 2 to the electric vehicle V using the transmission function. The transmitted electric power supply table is stored in the storage section 42. It should be noted that the electric power supply table may be stored in the storage section 42 in advance.

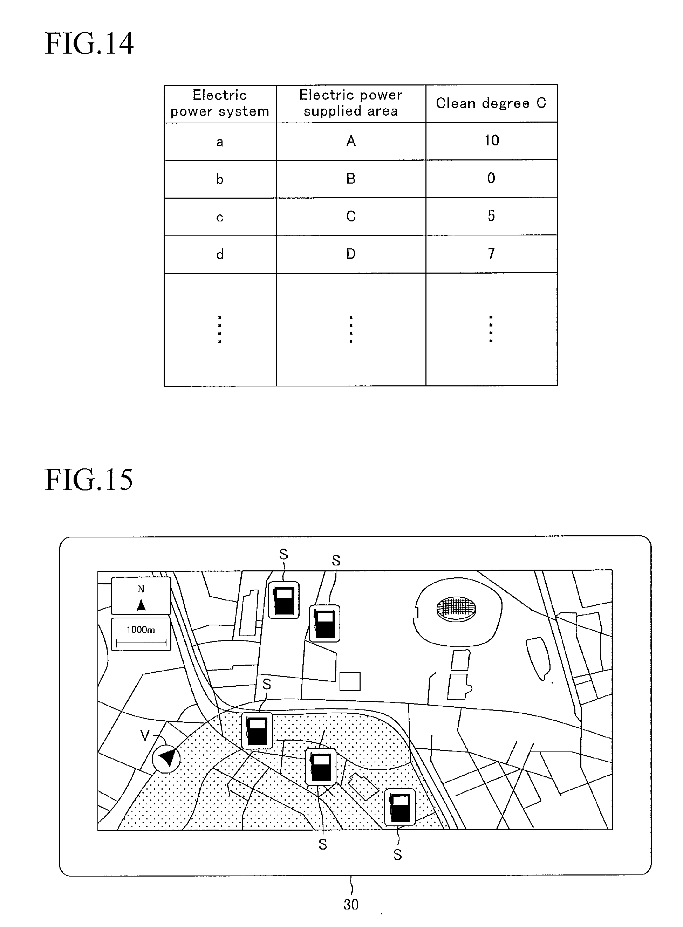

FIG. 14 shows an example of the electric power supply table. As shown in FIG. 14, the electric power supply table defines a relationship among each of the electric power systems, each divided electric power supplied area according to the each of the electric power systems, and the clean degree of the electric power supplied to each of the electric power supplied areas. In the example shown in the FIG.14, the clean degree of the electric power supplied to the electric power supplied area A of the electric power system a is 10, the clean degree of the electric power supplied to the electric power supplied area B of the electric power system b is 0, the clean degree of the electric power supplied to the electric power supplied area C of the electric power system c is 5, and the clean degree of the electric power supplied to the electric power supplied area D of the electric power system d is 7. It should be noted that the clean degree is expressed by integers from 0 to 10, and becomes higher as the value of the integer becomes larger.

After the display control section 43 obtains each of the clean degrees for each of the electric power supplied areas of the electric power systems, with reference to the electric power supply table at S401 shown in FIG. 13, the section 43 reads the map data from the storage section 42 (S402), and then, reads the location information of the charging stations from the charging station relating information stored in the storage section 42 (S403). Subsequently, the display control section 43 displays the map in such a manner that the map covers the present position of the electric vehicle V on the on-board display 30 (S404).

Subsequently, the display control section 43 displays, based on the location information read at S403, the charge enablement sign at the position corresponding to the location of the charging station in the map displayed on the on-board display (S405). Thereafter, the display control section 43 displays the displayed areas in the map using different colors (color-codes the areas), based on the clean degrees, each obtained for each of the electric power supplied areas at S401 (S406). For example, the electric power supplied area having a clean degree of 0 is displayed in red, the electric power supplied area having a clean degree of 1 to 9 is displayed in yellow, and the electric power supplied area having a clean degree of 10 is displayed in blue. Thereafter, the display control section 43 determines whether or not the end signal has been input (S407). If the end signal has not been input (S407: No), the display control section 43 proceeds to S405 so as to repeat the processes from S405 to S407. When it is determined that the end signal has been input (S407: Yes), the display control section 43 ends the present routine.

FIG. 15 shows an example of the screen displayed on the on-board display 30 when the display control section 43 executes the above described display control routine. As shown in FIG. 15, the sign indicating the present position of the electric vehicle V and the charge enablement sign S indicating the location of the charging station are displayed in a superimposed manner in the map displayed on the on-board display 30. Further, the map is divided into areas in accordance with the clean degree of the supplied electric power. In FIG. 15, the map is divided into the area shown by being doted, and the other area. The clean degree of the electric power supplied to the dotted area is 10, and the clean degree of the electric power supplied to the other area is 0. That is, according to the present embodiment, the clean electric power supplied area (the dotted area shown in FIG. 15) to which the electric power which includes the clean electric power is supplied is displayed so as to be able to be differentiated from an un-clean electric power supplied area (the area which is not dotted shown in FIG. 15) to which the electric power which does not include the clean electric power is supplied, on the on-board display 30. The clean electric power is supplied to the charging station indicated by the charge enablement sign S in the dotted area. Accordingly, the occupant of the electric vehicle V can stop by the charging station located in the dotted area so as to charge the clean electric power to the electric vehicle V there.

Further, when the occupant of the vehicle V sets the destination of the electric vehicle V by operating the route guidance button provided on the on-board display 30, the route guidance section 44 searches for the route to the destination, and guide the electric vehicle V in accordance with the searched route.

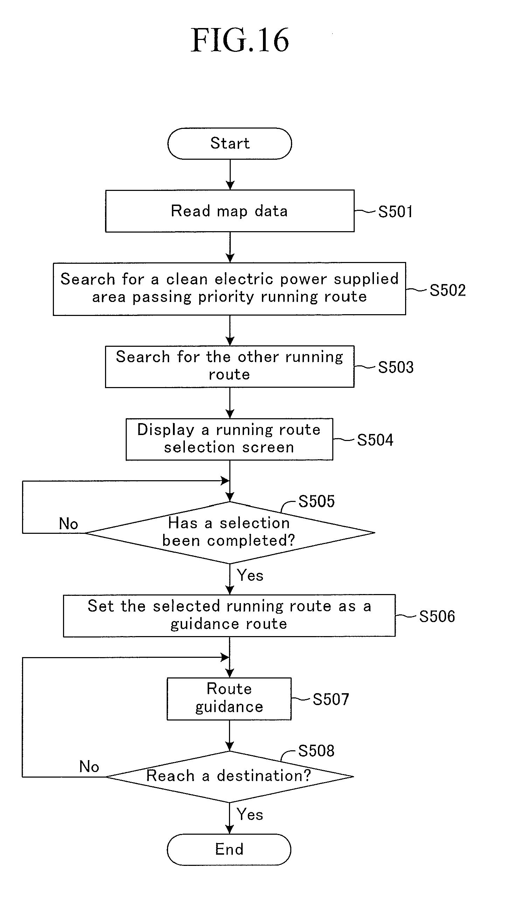

FIG. 16 is a flowchart showing a route guidance processing routine executed by a route guidance section 44 in order to guide the electric vehicle V from the preset position to the destination, in the present embodiment. The present routine is executed when the destination of the electric vehicle has been set, that is, when the occupant of the electric vehicle V has requested the route guidance to the destination.

After this routine is started, the route guidance section 44 firstly reads the map data stored in the storage section 42 at S501 shown in FIG. 16. Subsequently, the section 44 searches for an clean electric power supplied area passing priority running route (S502). The clean electric power supplied area passing priority running route is a running route, which is set so that the electric vehicle V can reach to the destination from the present position along the route, and which passes through the area (the clean electric power supplied area) to which the electric power including the clean electric power is supplied. In the present embodiment, for example, the route guidance section 44 searches for the clean electric power supplied area passing priority running route as follows.

Firstly, the route guidance section 44 searches for a shortest route from the present position to the destination of the electric vehicle V. Subsequently, the route guidance section 44 determines whether or not the electric vehicle V passes through one or more of the clean electric power supplied area(s) while the electric vehicle V runs along the searched shortest route. In this case, the route guidance section 44 can set, as the clean electric power supplied area, an area displayed in a specific color as an area to which the electric power having the clean degree equal to or higher than a predetermined value (e.g., the reference clean degree) is supplied, among the electric power supplied areas which are colored at S406 shown in FIG. 13 by the display control section 43. The route guidance section 44 determines whether or not the electric vehicle V passes through one or more of the clean electric power supplied area(s) set as described above while the electric vehicle V runs along the searched shortest route. If the electric vehicle V passes through one or more of those, the route guidance section 44 sets the shortest route as the clean electric power supplied area passing priority running route.

In contrast, if the electric vehicle V does not pass through any of the clean electric power supplied areas while the electric vehicle V runs along the searched shortest route, the route guidance section 44 searched for a route having a distance which is the second shortest with regard to the shortest route. Then, the route guidance section 44 determines whether or not the electric vehicle V passes through the clean electric power supplied area(s) while the electric vehicle V runs along that searched route. If the electric vehicle V passes through the clean electric power supplied area(s), the route guidance section 44 sets that route as the clean electric power supplied area passing priority running route. If not, the route guidance section 44 searches for the next shortest route and makes a determination similar to one described above.

As described above, the route guidance section 44 searches for the clean electric power supplied area passing priority running route. As a result, the shortest route which passes through the clean electric power supplied area(s) is set as the clean electric power supplied area passing priority running route. That is, the distance prioritized clean electric power supplied area passing priority running route is searched out at S502. It should be noted that, in place of the distance prioritized clean electric power supplied area passing priority running route, a time prioritized clean electric power supplied area passing priority running route, a toll road prioritized clean electric power supplied area passing priority running route, or the like, may be searched out.

Subsequently, the route guidance section 44 searches for the other running route (S503). The other running route to be searched for may include a distance prioritized running route whose distance between the present position to the destination is the shortest, a time prioritized running route along which the electric vehicle V can reach the destination from the present position in the shortest time, a toll road prioritized running route which has the electric vehicle V utilize a toll road(s), or the like.

Subsequently, the route guidance section 44 displays a running route selection screen on the on-board display 30 (S504). On the running route selection screen, either one of the clean electric power supplied area passing priority running route found at S502 and the other running route found at S503, as well as display-buttons for displaying each of those running routes are displayed. When the display-buttons are operated, the running route displayed on the running route selection screen is switched.

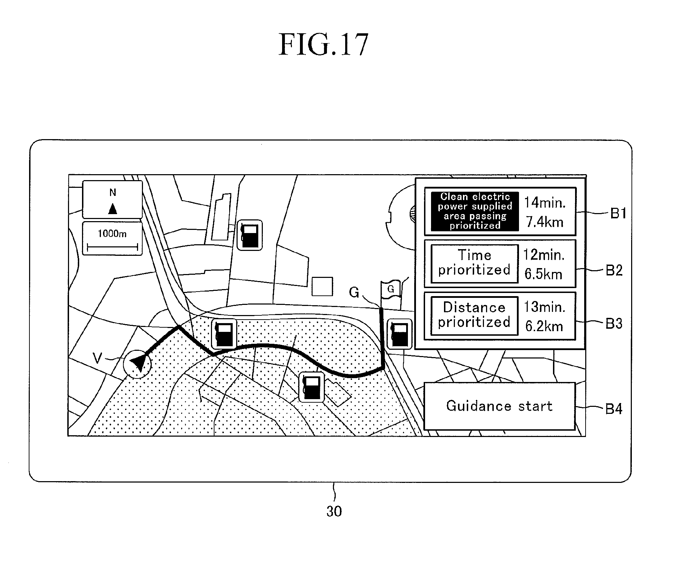

FIG. 17 shows the running route selection screen displayed on the on-board display 30. As shown in FIG. 17, a map covering the present position and the destination G of the electric vehicle V is displayed in the running route selection screen. In addition, the running route searched out by the route guidance section 44 is displayed with a heavy line in a superimposed manner in the displayed map. Further, each of a display button B1 for displaying the clean electric power supplied area passing priority running route, a display button B2 for displaying the time prioritized running route, and a display button B3 for displaying the distance prioritized running route, is displayed on the running route selection screen. In this case, the display button B1 for displaying the clean electric power supplied area passing priority running route is displayed at an uppermost portion in such a manner that the display button B1 is more easily noticeable to the occupant of the electric vehicle V than the other buttons B2 and B3. Furthermore, on an initial screen of the running route selection screen (the running route selection screen in which any one of the display buttons B1, B2, and B3 has not been operated yet), the clean electric power supplied area passing priority running route is displayed. When the occupant of the electric vehicle V touches any one of the display buttons B1, B2, and B3, the running route corresponding to the touched button is displayed in a superimposed manner in the map. When the display button is touched, a color of background and a letter color of the touched button are reversed. Accordingly, the occupant of the electric vehicle V can visually recognize that the running route corresponding to the touched button is displayed. In the case shown in FIG. 17, the display button B1 has been touched, and thus, the clean electric power supplied area passing priority running route is being displayed in the map of the running route selection screen in a superimposed manner.

In addition, the clean electric power supplied area is color-coded in the map displayed on the running route selection screen shown in FIG. 17 in such a manner that the clean electric power supplied area is differentiated form the un-clean electric power supplied area . For this color coding, the color-coding process performed by the display control section 43 at S406 shown in FIG. 13 may be used. When the electric vehicle V runs along the clean electric power supplied area passing priority running route, the electric vehicle V passes through the portion which is color-coded as the clean electric power supplied area.

After displaying the running route selection screen on the on-board display 30 at 504 shown in FIG. 16, the route guidance section 44 determines whether or not a selection of the running route has been completed (S505). In this case, as shown in FIG. 17, the guidance start button B4 is also displayed on the running route selection screen. When the guidance start button B4 is touched, the running route displayed at that point in time on the running route selection screen is selected and selection of the running route is completed.

When it is determined that the selection is completed at S505 (S505:Yes), the route guidance section 44 sets the selected running route as a guidance route to guide the electric vehicle V to the destination (S506), and guides the electric vehicle V in accordance with the set guidance route (S507). When guiding the electric vehicle V, the display control section 43 executes the display control routine shown in FIG. 13 to display the set guidance route by a heavy line in a superimposed manner in the map of the screen shown in FIG. 15 displayed by the on-board display 30. In this manner, the electric vehicle V is guided to the destination with the guidance route displayed in the map in a superimposed manner, and a voice navigation.

Thereafter, the route guidance section 44 determines whether or not the electric vehicle V has reached the destination (S508). When the vehicle V has not reached the destination (S508: No), the guide section 44 returns to S507 to continue to guide the electric vehicle V. When the vehicle V has reached the destination (S508: Yes), the guide section 44 ends the present routine.

In this manner, according to the present embodiment, the clean electric power supplied area passing priority running route is searched/found by the route guidance section 44. The searched clean electric power supplied area passing priority running route is displayed on the running route selection screen of the on-board display 30. In addition, when the clean electric power supplied area passing priority running route is selected as the running route to the destination, the clean electric power supplied area passing priority running route is displayed as the guidance route in the map of the on-board display 30, and the electric vehicle V is guided to the destination according to the displayed clean electric power supplied area passing priority running route. When the electric vehicle V is guided in accordance with the clean electric power supplied area passing priority running route, the electric vehicle V passes through the clean electric power supplied area(s) before it reaches the destination. In addition, in the map displayed on the on-board display 30, by executing the display control routine by the display control section 43, the clean electric power supplied area is displayed in such a manner that it is differentiated from the un-clean electric power supplied area , and the charge enablement sign at the location of the charging station is displayed. Accordingly, the occupant of the electric vehicle V can confirm, on the on-board display 30, the location(s) of the charging station(s) within the clean electric power supplied area(s) through which the vehicle V passes. Further, the electric power including the clean electric power is supplied to the charging station(s) within the clean electric power supplied area(s). Therefore, the occupant of the electric vehicle V can stop by the charging station within the clean electric power supplied area so as to charge the electric power including the clean electric power to the electric vehicle V.

The embodiments of the present invention have been described, however, the present invention should not be limited to the embodiments described above. For example, in the embodiments described above, the information stored in the database 2 of the information management center 1 is transmitted to the electric vehicle V, and the control unit 40 of the electric vehicle 40 obtains the charging station relating information through the transmission. However, the charging station relating information may be stored in advance in the storage section 42 of the control unit 40. The computer of the information management center 1 may execute the display control routine executed by the display control section 43 and the route guidance processing routine executed by the route guidance section 44, and the display control of the on-board display 30 and the route guidance may be carried out by the computer of the information management center 1. Further, the display control routine and the route guidance processing routine may be executed by the mobile information terminal carried by the occupant of the electric vehicle, and the charging station information and the area information may be displayed on a display of the mobile information terminal together with the clean electric power information and the clean electric power supply information, so that they are provided to the occupant of the electric vehicle. Furthermore, it is possible to carry out a combination of the above first and second embodiments. In this manner, various modifications may be adopted without departing from the scope of the invention.

## Claims

1. A charging information-providing apparatus for providing information relating to charging for an electric vehicle, which,
provides, to an occupant of the electric vehicle, charging station information representing a charging station at which the electric vehicle can be charged, together with clean electric power information which is information indicating whether or not electric power with which the electric vehicle can be charged at the charging station includes clean electric power generated by a power generation method defined as a power generation method which provides a low burden to environment.

2. The charging information-providing apparatus according to claim 1, wherein,
the charging station information includes information indicating a location of the charging station, and
the charging information-providing apparatus provides, to the occupant of the electric vehicle, the charging station information together with the clean electric power information, by displaying, at a position corresponding to the location of the charging station in a map displayed on a display device capable of displaying the map, a charge enablement sign indicating that a place corresponding to the charge enablement sign is a place where the electric vehicle can be charged, together with the clean electric power information for that charging station.

3. The charging information-providing apparatus according to claim 2, wherein,
the charging information-providing apparatus:
searches for a clean electric power charge priority running route, which is a running route of the electric vehicle to a destination, and which passes through a clean electric power charging station being a charging station at which the electric vehicle can be charged with the electric power including the clean electric power, and
displays the clean electric power charge priority running route in the map displayed on the display device.

4. The charging information-providing apparatus according to any one of claims 1 to 3, wherein,
the clean electric power information is a clean degree which represents a ratio of the clean electric power to the electric power used to charge the electric vehicle.

5. The charging information-providing apparatus according to claim 4, wherein,
the charging information-providing apparatus:
searches for a high clean degree charging station at which the electric vehicle can be charged with electric power having the clean degree which is higher than a home clean degree representing a ratio of the clean electric power to electric power used for charging the electric vehicle at a home of the occupant of the electric vehicle, while the electric vehicle is running along a returning road to the home of the occupant of the electric vehicle; and
provides, to the occupant of the electric vehicle, the charging station information together with the clean electric power information, by displaying, at a position corresponding to a location of the high clean degree charging station in a map displayed on a display device capable of displaying the map, a charge enablement sign indicating that a place corresponding to the charge enablement sign is a place where the electric vehicle can be charged, together with the clean degree for the high clean degree charging station.

6. A charging information-providing apparatus for providing information relating to charging for an electric vehicle, which,
provides, to an occupant of the electric vehicle, clean electric power supply information which is information indicating whether or not electric power supplied from an electric power source includes a clean electric power generated by a power generation method defined as a power generation method which provides a low burden to environment, together with area information representing an area to which the electric power is supplied from the electric power source.

7. The charging information-providing apparatus according to claim 6, wherein,
the charging information-providing apparatus:
provides, to the occupant of the electric vehicle, the clean electric power supply information together with the area information, by displaying, in a map displayed on a display device capable of displaying the map, a clean electric power supplied area to which electric power including the clean electric power is supplied from the electric power source in such a manner that the clean electric power supplied area can be differentiated from an un-clean electric power supplied area to which electric power which does not include the clean electric power is supplied from the electric power source.

8. The charging information-providing apparatus according to claim 7, wherein,
the charging information-providing apparatus:
searches for a clean electric power supplied area passing priority running route, which is a running route of the electric vehicle to a destination, and which passes through the clean electric power supplied area; and
displays the clean electric power supplied area passing priority running route in the map displayed on the display device.
